# EUROPEAN PATENT SPECIFICATION

(11) **EP 3 901 456 B1**
(45) Date of publication and mention of the grant of the patent: **22.03.2023**
(21) Application number: 20171063.9
(22) Date of filing: 23.04.2020
(51) Int. Cl.: F03D 13/40, F03D 80/50

(54) **METHOD FOR LIFTING A WIND TURBINE COMPONENT, LIFTING TOOL AND WIND TURBINE COMPONENT**
VERFAHREN ZUM HEBEN EINER WINDTURBINENKOMPONENTE, HEBEWERKZEUG UND WINDTURBINENKOMPONENTE
PROCÉDÉ DE LEVAGE D'UN COMPOSANT D'ÉOLIENNE, OUTIL DE LEVAGE ET COMPOSANT D'ÉOLIENNE

(43) Date of publication of application: 27.10.2021
(73) Proprietor: Siemens Gamesa Renewable Energy A/S, 7330 Brande (DK)
(72) Inventor: Dos Santos Duarte Carvalho, Pedro, 7100 Vejle (DK); Hansen, Klaus Hjorth, 7300 Jelling (DK)
(74) Representative: SGRE-Association

(56) References cited:
- EP-A1- 2 616 671
- EP-B1- 2 616 671
- CA-A1- 2 153 930
- US-A- 1 890 734
- US-A1- 2014 127 025

## Description

The present invention relates to a method for lifting a wind turbine component by means of a lifting tool and a lifting wire. The invention further relates to a corresponding lifting tool as well as a wind turbine component.

Wind turbines and wind turbines components require expensive and complex handling operations during their lifetime, either during manufacturing, installation, transport, maintenance, decommission or any other reason where there is a necessity of lifting the component. The transportation of such heavy components normally demands expensive and complex tools, heavy equipment like lifting cranes and specialized personal to operate commonly in a high-risk environment. For example, during offshore installation, technical personal must operate on top of a hub or a nacelle, removing lifting slings several meters above water in high wind conditions.

Single components or entire turbines will usually be lifted by the usage of structural supports like brackets attached to the wind turbine component. Other common solutions provide lugs and hooks. Alternatively, a lifting elongated body like a stem with a receiving port and a locking mechanism have been used to lift wind turbine components, like a hub or a nacelle, as stated in US patent application US 20160169191 A1.

Furthermore, patent US 9,719,487 A discloses the lifting of wind turbine blades through the usage of lifting openings through the blade surface and a load bearing connection attached to it. Moreover, patent US 8,562,302 A suggests the usage of several structural bores through wind turbine blades for attaching lifting rods or hooks therein.

EP 2 616 671 A1 is another relevant example of prior art.

In the stated solutions, the lifting operations for lifting wind turbine components involve expensive and complex structures with multi-step operation procedures involving several components.

It is an object of the present invention to overcome the above-mentioned problems. In particular, it is an object of the present invention to provide a simplified method and a system for lifting wind turbine components.

Aforesaid object is achieved by the subject-matters of the claims. In particular, the object is achieved by a method according to claim 1, a wind turbine component according to claim 4 as well as a lifting tool according to claim 9 of the present application. Further features and details of the invention can be drawn from the dependent claims, the description and the figures. Features and details discussed with respect to the inventive method are also correlated with the inventive wind turbine component, the inventive lifting tool and the other way around.

According to the present invention, a method is provided for lifting a wind turbine component by means of a lifting tool and a lifting wire, wherein the lifting tool provides a lifting tool base body with a supporting surface and an attachment surface, and wherein the wind turbine component provides a wind turbine base body, at least one guiding hole with an entrance opening and an exit opening, and a counter supporting surface located next to the exit opening outside the guiding hole. The method comprises the steps of:
- guiding the lifting wire through the guiding hole,
- attaching the lifting wire at the attachment surface of the lifting tool,
- placing the supporting surface of the lifting tool at the counter supporting surface of the wind turbine component and
- lifting the wind turbine component with the lifting tool and the lifting wire in a lifting direction from the exit opening to the entrance opening.

The inventive method proposes an easy and fast way to lift heavy wind turbine components. Further, the inventive solution allows a safe lifting operation since the lifting apparatus must not be operated on an outer surface but internally, inside the wind turbine component. At the same time, an increase in performance can be achieved since the accompanying lifting tool can be provided as a temporary tool reducing the overall weight of the wind turbine component to be lifted. Furthermore, due to the simple structure of the lifting tool, it is possible to use one lifting tool with a plurality of different wind turbine components.

In addition, by means of the simple coupling structure at the wind turbine component in the shape of the guiding hole, the proposed solution can reduce the overall costs of the wind turbine component. When lifting a wind turbine component in accordance with the proposed method, a reduction of the overall costs regarding transport of wind turbine components can be expected due to, either, the reduction of lifting time expended during production, installation and decommission of required components. Also, a reduction of tool costs can be expected.

The invention may be understood not only as a method for lifting a wind turbine component but also as a method for lifting a wind turbine and/or a wind turbine component being mounted at a wind turbine. That is, the lifting wire and the lifting tool can be configured strong and/or rigid enough for lifting a whole wind turbine. The lifting tool is preferably provided as a tool separate from the wind turbine component.

Further, the lifting tool may be provided as a lifting tool that can be lifted by a human, preferably lifted and/or han-died with one hand only. The lifting tool may thus have a weight of less than 20 kg or even less than 10 kg.

While guiding and/or putting the lifting wire through the guiding hole, the guiding wire may be guided and/or put in a guiding direction from the entrance opening to the exit opening through the guiding hole, wherein the wind turbine component will be lifted by means of the lifting tool and the lifting wire in the lifting direction which extends against the guiding direction.

The above-mentioned steps do not have to be performed in the given order. The first two steps especially may be performed in reverse order.

The lifting wire is preferably attached in the shape of a sling, in particular u-shaped or essentially u-shaped, at the attachment surface. The lifting wire may also be considered as a lifting cable or any similar string-shaped means for the desired purpose. That is, the lifting wire can be understood as a wire, a sling, a chain or other rope-type structures usable for lifting the described wind turbine components. Also, a plurality of lifting wires may be used. Therefore, the attachment portion is configured to provide space for more than one lifting wire and/or more than one sling of one lifting wire. The lifting tool and/or the attachment surface may not only match the lifting wire but also other lifting structures. While attaching the lifting wire at the attachment surface, the lifting wire is preferably only looped around the attachment surface, a respective attachment portion and/or the lifting tool base body. Lifting the wind turbine component with the lifting tool and the lifting wire preferably means lifting the lifting tool by means of the lifting wire and thus the wind turbine component to which the lifting tool is attached and/or at which the lifting tool is positioned in direct contact with each other while performing the lifting process.

According to another embodiment of the present invention, it is possible that the lifting wire is guided in a guiding direction from the entrance opening to the exit opening through the guiding hole against the lifting direction. In this way, the guiding wire that is already fixed to the crane, for example, can be easily guided through the guiding hole and attached to the lifting tool on the other side of the guiding hole.

Further, when performing the proposed method, it is possible that the lifting wire is guided in a U-shape and/or looped through the guiding hole. That is, the sling from the crane may just be guided through the guiding hole. On the other side of the guiding hole, the lifting tool may just be slung and/or looped around the lifting tool and pulled against the guiding direction and/or in lifting direction against the wind turbine component in an area near and/or next to the exit opening. This may be easily and quickly done by one technician only. Depending on selected lifting configurations, besides a so-called basket sling configuration which requires the described U-shape, it is possible to use a so-called single leg configuration where the sling is guided through the hole in a I-shape.

In a further aspect of the present invention, a wind turbine component is proposed for performing the above described method. The wind turbine component comprises a wind turbine base body, at least one guiding hole with an entrance opening and an exit opening for guiding a lifting wire for lifting the wind turbine component, wherein the counter supporting surface is located next to the exit opening outside the guiding hole. Therefore, the inventive wind turbine component brings up the same advantages that have been discussed in detail with respect to the inventive method.

In a preferred embodiment, the guiding hole is formed at a geometry- and/or weight-related center of the wind turbine component. The wind turbine component can be understood as a part of the wind turbine that is heavier than about 100 kg or even heavier than about 1000 kg, like a nacelle, a hub and a blade. The counter supporting surface is configured for detachably contacting the supporting surface of the lifting tool. The counter supporting surface is preferably flat. The location of the counter supporting surface next to the exit opening can be understood such that the counter supporting surface is located adjacent to the exit opening or at least in a range between 1 cm and 20 cm away from the exit opening.

Not the whole counter supporting surface must be permanently contacted by the support surface during lifting of the wind turbine component. During lifting of the wind turbine component, only part of the counter supporting surface may be in contact with the supporting surface. Moreover, the wind turbine base body may comprise a reinforcement portion at the counter supporting surface. The reinforcement portion comprises a higher stability, strength and/or stiffness compared to portions of the wind turbine base body around the reinforcement portion.

According to a further embodiment of the present invention, a wind turbine component may comprise a plurality of guiding holes formed in the wind turbine base body and a plurality of counter supporting surfaces each located next to the exit openings outside of the guiding holes. With a plurality of guiding holes, the force on the wind turbine component during lifting of the same can be evenly distributed and thus damaging and/or destroying the wind turbine component during lifting can be avoided.

Moreover, an inventive wind turbine component may comprise at least one chamber inside the wind turbine base body, wherein the at least one guiding hole extends from an outer surface of the wind turbine base body to the chamber, and wherein the counter supporting surface is part of the chamber. With the chamber inside the wind turbine base body, the lifting may be performed in a safe manner. No hooks or the like on the outer surface may catch unwanted items. Further, the attachment of the lifting tool may be performed inside the chamber, like inside the nacelle. Dangerous climbing outside the wind turbine component will not be necessary anymore. The chamber may define a chamber space that is essentially, preferably by at least 50 % or at least 70 %, surrounded by chamber walls, wherein the counter supporting surface can be located on such a chamber wall. The room inside a nacelle, a hub, a blade, or other big turbine components may be considered as such a chamber space.

In addition, a wind turbine component according to the present invention may comprise a counter connection means for providing a detachable, interlocking and/or form-fitting connection with a connection means of the lifting tool. With the counter connection means, loosing of the lifting tool can be avoided in an easy manner. The counter connection means may be configured as a simple loop at the wind turbine base body. The counter connection means may also comprise fixing means, like bolts and nuts, to lock the lifting tool in position at the wind turbine base body during lifting of the wind turbine component.

Furthermore, in an inventive wind turbine component, the wind turbine base body comprises at least one counter supporting recess in which the counter supporting surface is formed. By means of the recess, the lifting tool and/or the supporting surface can be easily fixed at the counter supporting surface during lifting of the wind turbine component. Shifting of the lifting tool during lifting can be avoided. Consequently, the safety during lifting can be improved.

According to a further aspect of the invention, a lifting tool for performing the above described method is provided. The lifting tool comprises a lifting tool base body with a supporting surface for supporting a counter supporting surface of the wind turbine component during lifting of the wind turbine component, and an attachment surface for attaching a lifting wire thereto. Thus, the inventive lifting tool brings up the same advantages that have been discussed in detail above.

The lifting tool can be provided as a simple tool that can be manufactured with low costs. The supporting surface is preferably flat, straight and/or even. In a preferred embodiment, the lifting tool base body comprises at least one supporting portion having at least two supporting surfaces, wherein the at least two supporting surfaces are parallel to each other. The lifting tool base body may comprise a first supporting portion and a second supporting portion, each comprising a cube- or cuboid-shaped body with four supporting surfaces each, wherein two supporting surfaces of each supporting portion are always parallel to each other. By means of this feature, the lifting tool can be used in four different orientations, providing a flexible usage of the lifting tool. The lifting tool base body is preferably provided in one piece and/or as a mono bloc.

In accordance with another embodiment of the present invention, it is possible that the lifting tool base body comprises a cross-section along a longitudinal axis of the lifting tool base body, having a symmetrical shape. This is beneficial for a flexible usage of the lifting tool as well. Further, the lifting tool base body can be symmetrical with regard to a symmetry axis, which extends orthogonally to the longitudinal axis. Moreover, even in case there is no specific longitudinal axis, the lifting tool base body can be symmetrical to at least one symmetry axis.

Moreover, at least part of the attachment surface can be located, with regard to a longitudinal axis of the lifting tool base body, in the middle of the lifting tool base body. This leads to a well-balanced force distribution from the lifting tool onto the wind turbine component during the lifting process.

Furthermore, the lifting tool base body of an inventive lifting tool may comprise, at the attachment surface, a circular cross-section. That is, the attachment surface may form a round and/or shaft-shaped attachment portion of the lifting tool base body, which provides a gentle contact surface for the lifting wire.

Further, an inventive lifting tool may comprise a connection means for providing a detachable, interlocking and/or form-fitting connection with a counter connection means of the wind turbine component. As already stated above, with the connection means, loosing of the lifting tool can be avoided in an easy manner. The connection means may be configured as a simple loop at the lifting tool base body. The connection means may also comprise fixing means, like bolts and nuts, to lock the lifting tool in position at the wind turbine base body during lifting of the wind turbine component.

According to another embodiment of the present invention, a lifting tool base body of the lifting tool may comprise a first supporting portion forming at least part of the supporting surface, and an attachment portion forming at least part of the attachment surface, wherein the first supporting portion is c-shaped and at least part of the attachment portion protrudes from the center of the first supporting portion to form an E-shaped lifting tool base body. With this configuration, a handy and compact lifting tool with a relatively big supporting surface can be provided.

The c-shape may be understood as a u-shape, a v-shape and/or as a horseshoe-shape or the like. The E-shape does not have to have sharp corners. As an alternative embodiment, it would also be possible that the lifting tool base body comprises a ring-shaped and/or o-shaped base body comprising the supporting surface and an attachment portion comprising the attachment surface, wherein at least one attachment portion is rod-shaped inside the supporting portion while extending from one inner surface of the supporting portion to another inner surface of the supporting portion. In this configuration, the lifting tool base body may be θ-shaped or the like.

Moreover, the lifting tool base body of an inventive lifting tool may comprise a second supporting portion that is formed at the attachment portion and spaced from the first supporting portion. By means of the second supporting portion, the lifting force can be distributed even better from the lifting tool onto the wind turbine component while still providing an easy way to attach the lifting wire to the attachment surface. It is of further advantage when the first supporting portion and the second supporting portion have the same height in a direction perpendicular to the supporting surface, while the attachment portion has a lower and/or smaller height than the supporting portions. In this way, the second supporting portion may further function as a holding means to prevent the lifting wire slipping from the attachment portion. Such a holding means may also be provided in the shape of a protrusion from the attachment portion and/or from the attachment surface.

The present invention is discussed in more detail with respect to the accompanying drawings, in which
- Fig. 1: shows a lifting tool according to a first embodiment of the present invention,
- Fig. 2: shows an arrangement of a lifting tool at a wind turbine component according to a first embodiment of the present invention,
- Fig. 3: shows a lifting tool according to a second embodiment of the present invention,
- Fig. 4: shows an arrangement of a lifting tool at a wind turbine component according to a second embodiment of the present invention,
- Fig. 5: shows a side view of a lifting tool according to a third embodiment of the present invention,
- Fig. 6: shows a front view of a lifting tool according to the third embodiment of the present invention,
- Fig. 7: shows a side view of a lifting tool according to a fourth embodiment of the present invention,
- Fig. 8: shows a front view of a lifting tool according to the fourth embodiment of the present invention,
- Fig. 9: shows a side view of a lifting tool according to a fifth embodiment of the present invention,
- Fig. 10: shows a front view of a lifting tool according to the fifth embodiment of the present invention,
- Fig. 11: shows a side view of a lifting tool according to a sixth embodiment of the present invention in a first functional condition,
- Fig. 12: shows a side view of the lifting tool according to the sixth embodiment of the present invention in a second functional condition,
- Fig. 13: shows an arrangement of lifting tools at a wind turbine component according to a third embodiment of the present invention,
- Fig. 14: shows an arrangement of a lifting tool at a wind turbine component according to a fourth embodiment of the present invention,
- Fig. 15: shows an arrangement of a lifting tool at a wind turbine component according to a fifth embodiment of the present invention and
- Fig. 16: shows a flow chart for explaining a method according to a preferred embodiment of the present invention.

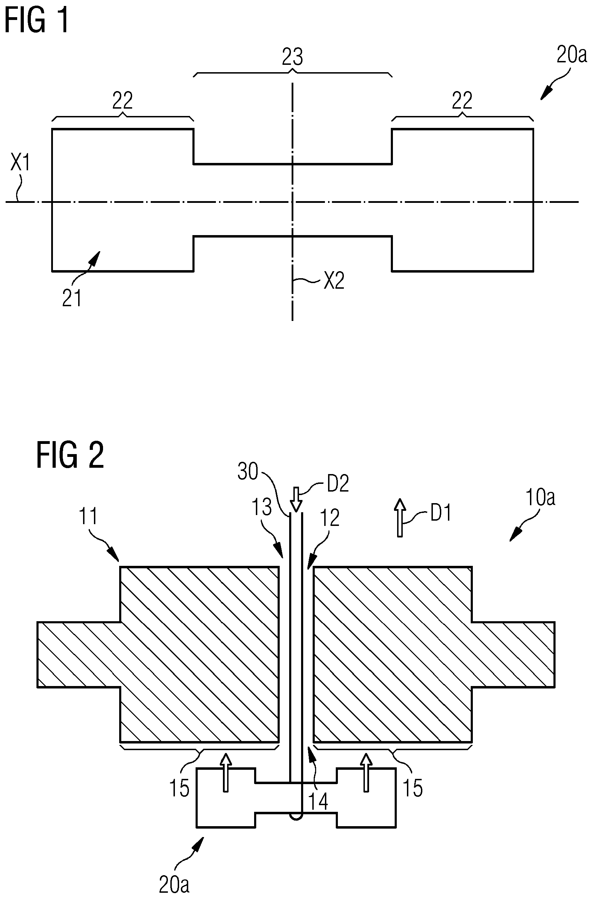

In Fig. 1, a lifting tool 20a according to a first embodiment is shown. The lifting tool 20a comprises a lifting tool base body 21 with a supporting surface 22 for supporting a counter supporting surface 15 of a wind turbine component 10a (shown in Fig. 2) during lifting of the wind turbine component 10a. The lifting tool 20a further comprises an attachment surface 23 for attaching a lifting wire 30 thereto. The shown lifting tool base body 21 is symmetrically shaped. A symmetry axis X2 extends perpendicular to the longitudinal axis X1. Further, the attachment surface 23 is located, with regard to a longitudinal axis X1 of the lifting tool base body 21, in the middle of the lifting tool base body 21.

Fig. 2 shows a wind turbine component 10a, comprising a wind turbine base body 11 and a guiding hole 12 with an entrance opening 13 and an exit opening 14 for guiding a lifting wire 30 for lifting the wind turbine component 10a, wherein the counter supporting surface 15 is located next to the exit opening 14 outside the guiding hole 12. Fig. 2 further shows a lifting direction D1, in which the wind turbine component 10a will be lifted by means of the lifting tool 20a and the lifting wire 30. Moreover, a guiding direction D2 is shown, in which the lifting wire will be guided and/or put through the guiding hole 12.

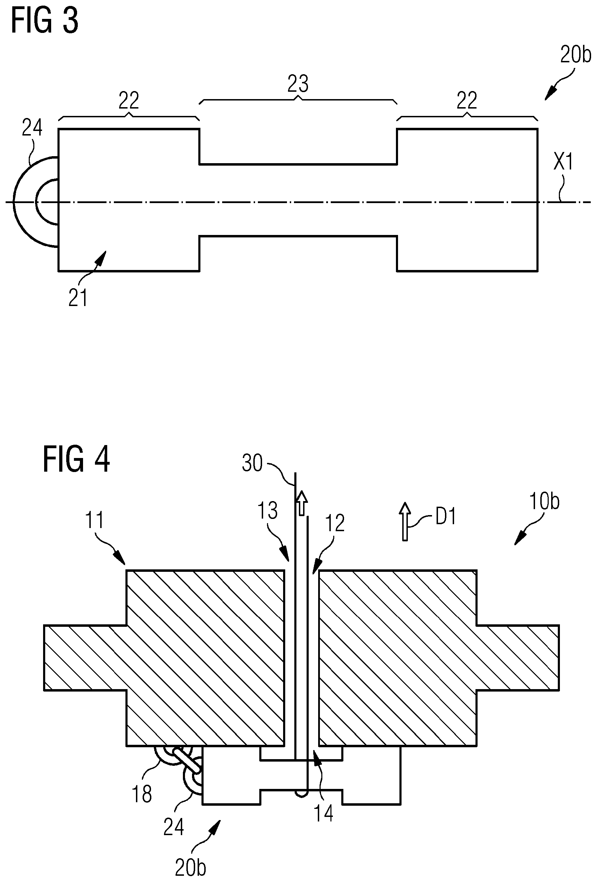

In Fig. 3, a lifting tool 20b according to a second embodiment is shown. The lifting tool 20b comprises connection means 24 in the shape of a loop mounted to the lifting tool base body 21 for providing a detachable and interlocking connection with a counter connection means 18 of the wind turbine component 10b. Such a connection is shown in Fig. 4. In particular, a wind turbine component 10b according to a second embodiment is shown, comprising the counter connection means 18 for providing the detachable and interlocking connection with the connection means 24 of the lifting tool 20b.

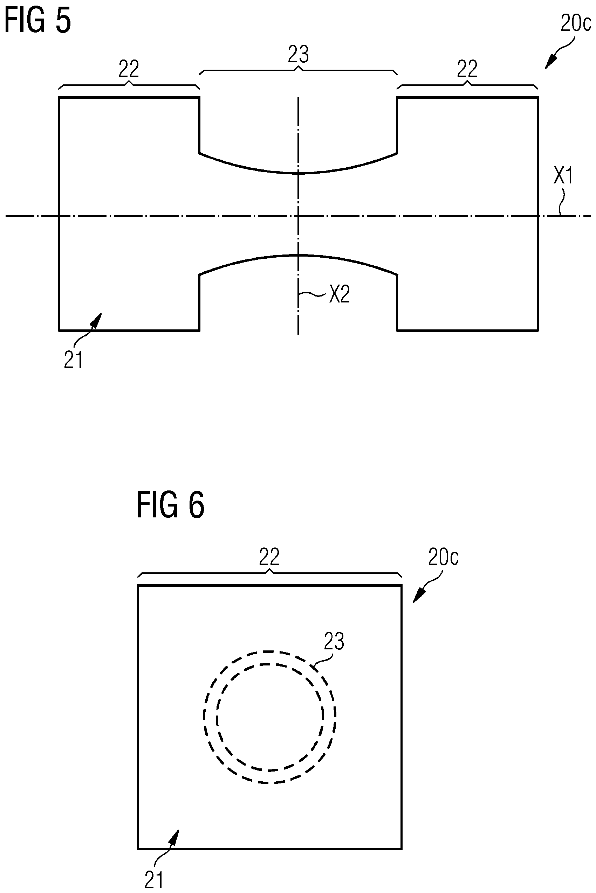

Fig. 5 and Fig. 6 show a lifting tool 20c according to a third embodiment. As can be seen there, the attachment surface 23 is funnel-shaped, in particular double-funnel-shaped, wherein the diameters of the funnels become smaller towards each other. Thus, the lifting wire 30 will be automatically held in the desired position in the middle of the lifting tool 20c. Like in the first and the second embodiment, the supporting surface 22 is part of a supporting portion, comprising two cuboid supporting structures, each comprising four supporting surface portions, while the lifting tool base body 21 comprises, over the entire attachment surface 23, a circular cross-section.

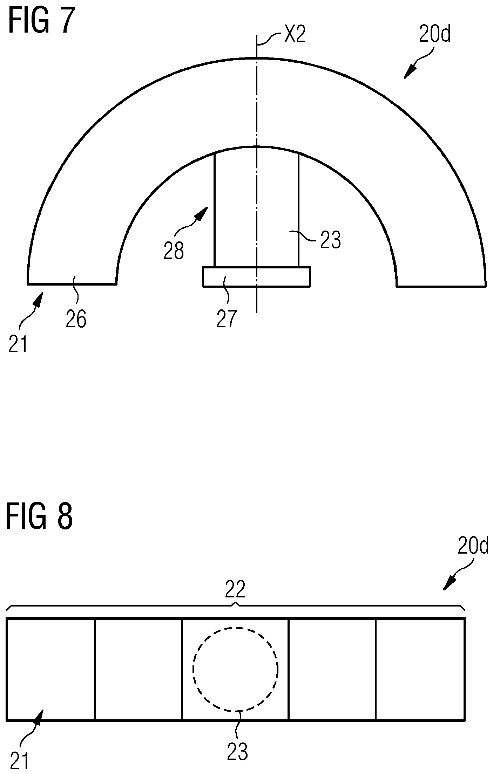

Fig. 7 and Fig. 8 show a lifting tool 20d according to a fourth embodiment. The shown lifting tool base body 21 comprises a first supporting portion 26 forming a first part of the supporting surface 22, a second supporting portion 27 forming a second part of the supporting surface 22, and an attachment portion 28 forming at least part of the attachment surface 23. The first supporting portion 26 is c-shaped and the attachment portion 28 protrudes from the center of the first supporting portion 26 to form an E-shaped lifting tool base body 21. Further, the second supporting portion 27 is formed at the attachment portion 28 spaced from the first supporting portion 26 having the same height as the first supporting portion 26. The attachment portion 28 is rod-shaped and the second supporting portion 27 is flange-shaped at the attachment portion 28.

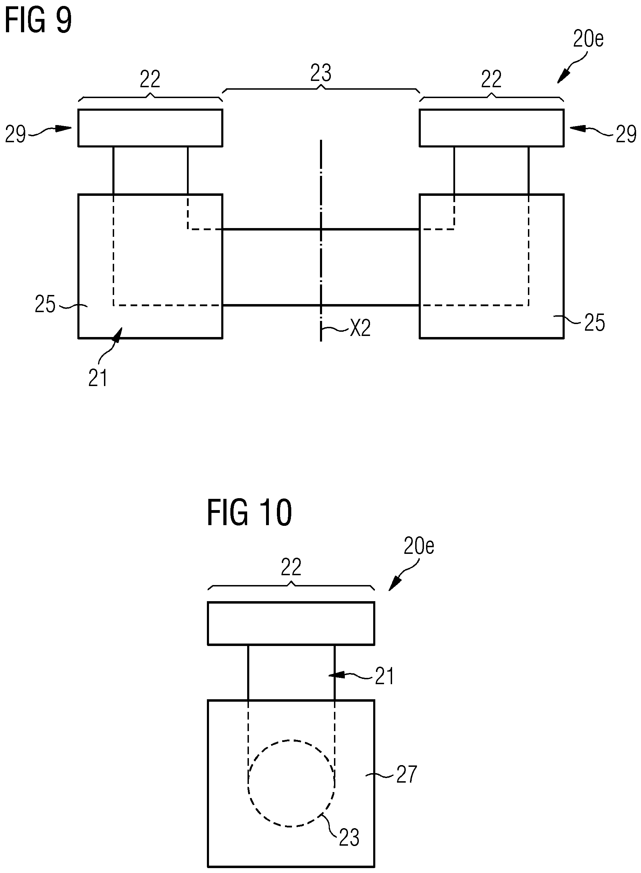

In Fig. 9 and Fig. 10, a handle-shaped lifting tool 20e according to a fifth embodiment is shown. The lifting tool 20e comprises a first elastic coating 25 and a second elastic coating 25, each wrapped around a bent part of the handle-shaped lifting tool base body 21, wherein the attachment surface 23 is located between the first elastic coating 25 and the second elastic coating 25. Further, the lifting tool base body 21 comprises a flange portion 29 on each end of the lifting tool base body 21, wherein the supporting surface 22 is located on an end face of each flange portion 29. The elastic coatings 25 can be made of rubber.

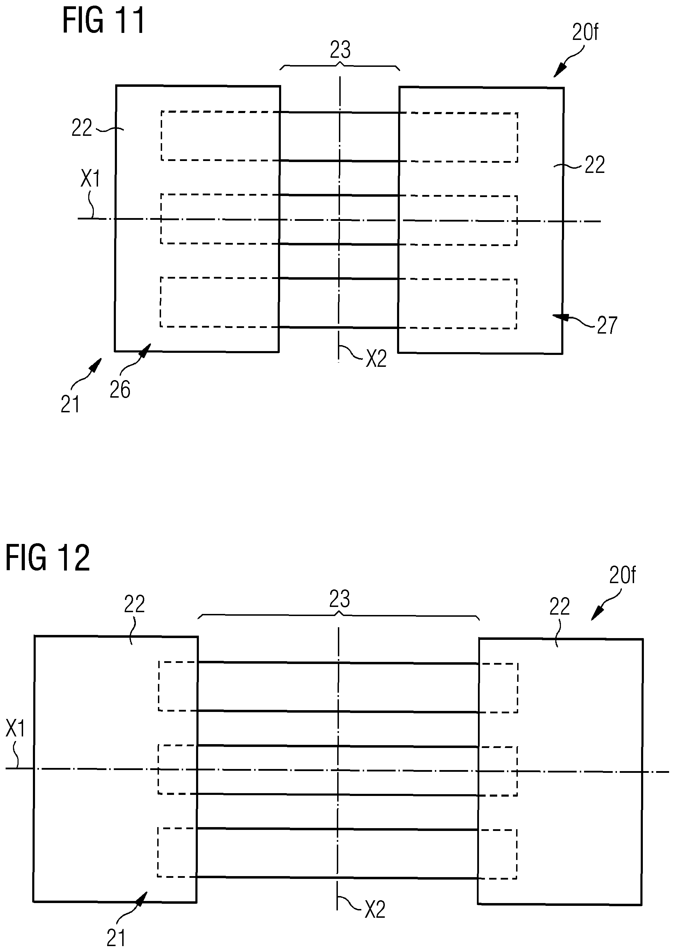

Fig. 11 and Fig. 12 show a lifting tool 20f according to a sixth embodiment. The lifting tool 20f comprises three rod-shaped attachment portions, each comprising the attachment surface 23, wherein the attachment surface 23 of the middle attachment portion is the preferred attachment surface 23 for the lifting process. The supporting portions 26, 27 are configured to be moveable relative to the attachment portions. Therefore, the lifting tool 20f can be adapted to different wind turbine components. As can be seen, the lifting tool base body 21 may also have a closed geometry regarding the attachment surface 23.

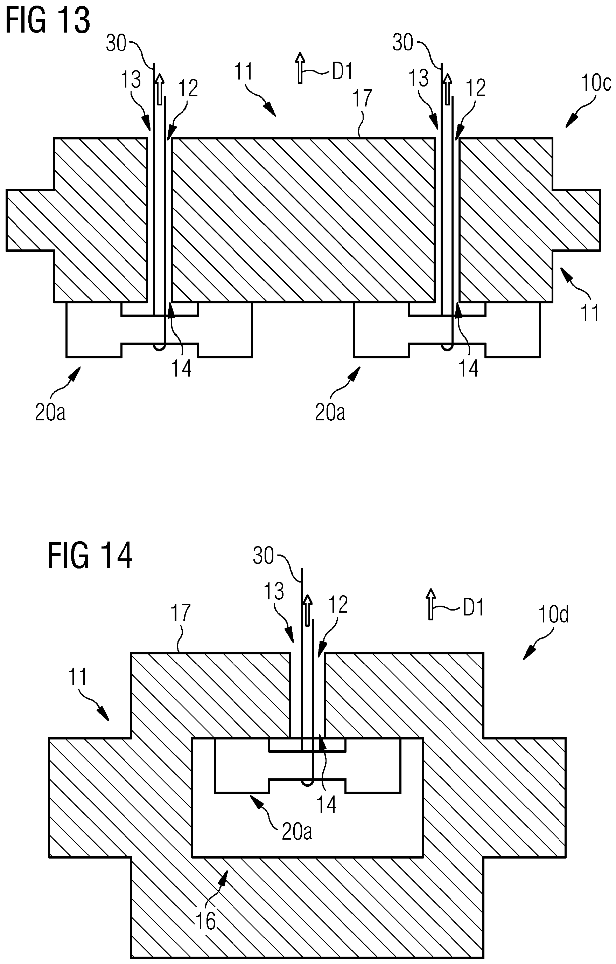

In Fig. 13, a wind turbine component 10c according to a third embodiment is shown. The wind turbine base body 11 comprises a plurality of guiding holes 12 formed in the wind turbine base body 11 and a plurality of counter supporting surfaces 15 and/or counter supporting surface portions each located next to the exit openings 14 outside of the guiding holes 12.

In Fig. 14, a wind turbine component 10d according to a fourth embodiment is shown. The wind turbine component 10d comprises a chamber 16 inside the wind turbine base body 11, wherein the guiding hole 12 extends from an outer surface 17 of the wind turbine base body 11 to the chamber 16, and wherein the counter supporting surface 15 is part of the chamber 16.

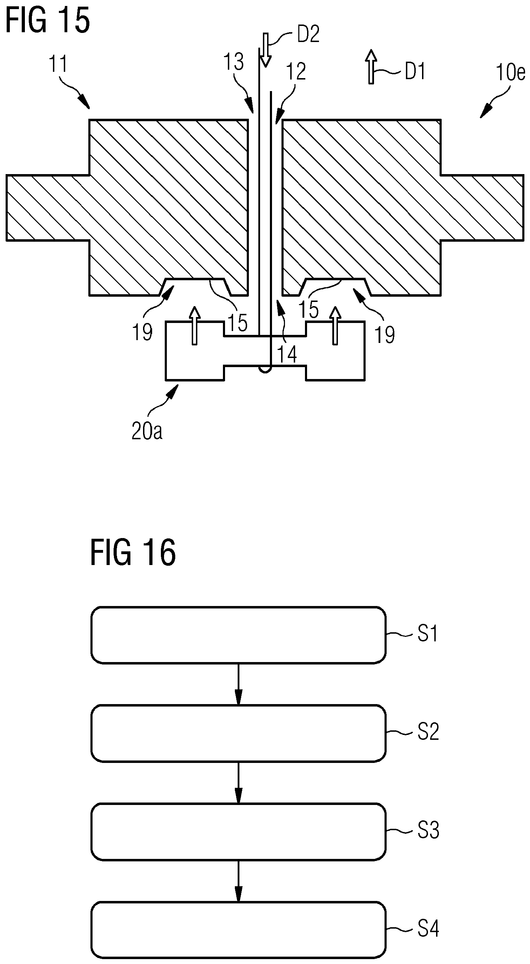

In Fig. 15, a wind turbine component 10e according to a fifth embodiment is shown. Here, the wind turbine base body 11 comprises two counter supporting recesses 19 in each of which a counter supporting surface 15 is formed.

With regard to Fig. 16, a method for lifting the above described wind turbine component 10a by means of the lifting tool 20a and the lifting wire 30 is described. In a first step S1, the lifting wire 30 is guided in a u-shape and/or looped in the guiding direction D2 from the entrance opening 13 to the exit opening 14 through the guiding hole 12 against the lifting direction D1. In a second step S2, the lifting wire 30 is attached at the attachment surface 23 of the lifting tool 20a. Thereafter, in a third step S3, the supporting surface 22 of the lifting tool 20a is placed at the counter supporting surface 15 of the wind turbine component 10a by lifting the lifting tool 20a with the lifting wire 30. Then, in a fourth step S4, the wind turbine component 10a is lifted with the lifting tool 20a and the lifting wire 30 in the lifting direction D1 from the exit opening 14 to the entrance opening 13.

The aforesaid description of the accompanying figures is given by way of detail and example.

## Claims

1. Method for lifting a wind turbine component (10a; 10b; 10c; 10d; 10e) by means of a lifting tool (20a; 20b; 20c; 20d; 20e; 20f) and a lifting wire (30), wherein the lifting tool (20a; 20b; 20c; 20d; 20e; 20f) provides a lifting tool base body (21) in one piece with a supporting surface (22) and an attachment surface (23), wherein the supporting surface (22) is flat and the attachment surface (23) comprises a circular cross-section, and wherein the wind turbine
component (10a; 10b; 10c; 10d; 10e) provides a wind turbine base body (11), at least one guiding hole (12) with an entrance opening (13) and an exit opening (14), and a counter supporting surface (15) located next to the exit opening (14) outside the guiding hole (12), wherein the counter supporting surface (15) is flat, comprising the steps of:
- guiding the lifting wire (30) through the guiding hole (12),
- attaching the lifting wire (30) at the attachment surface (23) of the lifting tool (20a; 20b; 20c; 20d; 20e; 20f),
- placing the supporting surface (22) of the lifting tool (20a; 20b; 20c; 20d; 20e; 20f) at the counter supporting surface (15) of the wind turbine component (10a; 10b; 10c; 10d; 10e) for providing a flush flat supporting contact between the supporting surface (22) and the counter supporting surface (15) during lifting of the wind turbine component (10a; 10b; 10c; 10d; 10e), and
- lifting the wind turbine component (10a; 10b; 10c; 10d; 10e) with the lifting tool (20a; 20b; 20c; 20d; 20e; 20f) and the lifting wire (30) in a lifting direction (D1) from the exit opening (14) to the entrance opening (13).

2. Method according to claim 1, **characterized in that** the lifting wire (30) is guided in a guiding direction (D2) from the entrance opening (13) to the exit opening (14) through the guiding hole (12) against the lifting direction (D1).

3. Method according to any one of the above claims, **characterized in that** the lifting wire (30) is guided in a U-shape through the guiding hole (12).

4. Wind turbine component (10a; 10b; 10c; 10d; 10e) for performing a method according to any one of the above claims, comprising a wind turbine base body (11), at least one guiding hole (12) with an entrance opening (13) and an exit opening (14) for guiding a lifting wire (30) for lifting the wind turbine component (10a; 10b; 10c; 10d; 10e), and a counter supporting surface (15) located next to the exit opening (14) outside the guiding hole (12), **characterized in that** the counter supporting surface (15) is flat.

5. Wind turbine component (10c) according to claim 4, **characterized by** a plurality of guiding holes (12) formed in the wind turbine base body (11) and a plurality of counter supporting surfaces (15), each located next to the exit openings (14) outside of the guiding holes (12).

6. Wind turbine component (10d) according to any one of claims 4 to 5, **characterized by** at least one chamber (16) inside the wind turbine base body (11), wherein the at least one guiding hole (12) extends from an outer surface (17) of the wind turbine base body (11) to the chamber (16), and wherein the counter supporting surface (15) is part of the chamber (16).

7. Wind turbine component (10b) according to any one of claims 4 to 6, **characterized by** counter connection means (18) for providing a detachable, interlocking and/or form-fitting connection with a connection means (24) of the lifting tool (20b).

8. Wind turbine component (10e) according to any one of claims 4 to 7, **characterized in that** the wind turbine base body (11) comprises at least one counter supporting recess (19) in which the counter supporting surface (15) is formed.

9. Lifting tool (20a; 20b; 20c; 20d; 20e; 20f) for performing a method according to any one of the claims 1 to 3, comprising a lifting tool base body (21) in one piece with a supporting surface (22) for supporting a counter supporting surface (15) of the wind turbine component (10a; 10b; 10c; 10d; 10e) during lifting of the wind turbine component (10a; 10b; 10c; 10d; 10e), and an attachment surface (23) for attaching a lifting wire (30) thereto, wherein the supporting surface (22) is flat and the attachment surface (23) comprises a circular cross-section.

10. Lifting tool (20a; 20b; 20c; 20d; 20e; 20f) according to claim 9, **characterized in that** the lifting tool base body (21) is symmetrically shaped.

11. Lifting tool (20a; 20b; 20c; 20d; 20e; 20f) according to any one of claims 9 to 10, **characterized in that** at least part of the attachment surface (23) is located, with regard to a longitudinal axis (X1) of the lifting tool base body (21), in the middle of the lifting tool base body (21).

12. Lifting tool (20a; 20b; 20c; 20d; 20e; 20f) according to any one of claims 9 to 11, **characterized in that** the lifting tool base body (21) comprises, at the attachment surface (23), a circular cross-section.

13. Lifting tool (20b) according to any one of claims 9 to 12, **characterized by** connection means (24) for providing a detachable, interlocking and/or form-fitting connection with a counter connection means (18) of the wind turbine component (10b).

14. Lifting tool (20d) according to any one of claims 9 to 13, **characterized in that** the lifting tool base body (21) comprises a first supporting portion (26) forming at least part of the supporting surface (22), and an attachment portion (28) forming at least part of the attachment surface (23), wherein the first supporting portion (26) is c-shaped and at least part of the attachment portion (28) protrudes from the center of the first supporting portion (26) to form an E-shaped lifting tool base body (21).

15. Lifting tool (20d) according to claim 14, **characterized in that** the lifting tool base body (21) comprises a second supporting portion (27) that is formed at the attachment portion (28) spaced from the first supporting portion (26).

## Patentansprüche

1. Verfahren zum Anheben eines Windturbinenbauteils (10a; 10b; 10c; 10d; 10e) mittels eines Hebewerkzeugs (20a; 20b; 20c; 20d; 20e; 20f) und eines Hebedrahts (30), wobei das Hebewerkzeug (20a; 20b; 20c; 20d; 20e; 20f) einen mit einer Stützfläche (22) und einer Anbringfläche (23) einteiligen Hebewerkzeugbasiskörper (21) bereitstellt, wobei die Stützfläche (22) flach ist und die Anbringfläche (23) einen kreisförmigen Querschnitt umfasst,
und wobei das Windturbinenbauteil (10a; 10b; 10c; 10d; 10e) einen Windturbinenbasiskörper (11), mindestens ein Führungsloch (12) mit einer Eingangsöffnung (13) und einer Austrittsöffnung (14) und eine Gegenstützfläche (15) bereitstellt, die neben der Austrittsöffnung (14) außerhalb des Führungslochs (12) angeordnet ist, wobei die Gegenstützfläche (15) flach ist, umfassend die folgenden Schritte:
- Führen des Hebedrahts (30) durch das Führungsloch (12),
- Anbringen des Hebedrahts (30) an der Anbringfläche (23) des Hebewerkzeugs (20a; 20b; 20c; 20d; 20e; 20f),
- Platzieren der Stützfläche (22) des Hebewerkzeugs (20a; 20b; 20c; 20d; 20e; 20f) an der Gegenstützfläche (15) des Windturbinenbauteils (10a; 10b; 10c; 10d; 10e) zur Bereitstellung eines bündigen flachen Stützkontakts zwischen der Stützfläche (22) und der Gegenstützfläche (15) während des Anhebens des Windturbinenbauteils (10a; 10b; 10c; 10d; 10e), und
- Anheben des Windturbinenbauteils (10a; 10b; 10c; 10d; 10e) mit dem Hebewerkzeug (20a; 20b; 20c; 20d; 20e; 20f) und dem Hebedraht (30) in einer Heberichtung (D1) von der Austrittsöffnung (14) zu der Eingangsöffnung (13).

2. Verfahren nach Anspruch 1, **dadurch gekennzeichnet, dass** der Hebedraht (30) in einer Führungsrichtung (D2) von der Eingangsöffnung (13) zu der Austrittsöffnung (14) durch das Führungsloch (12) entgegen der Heberichtung (D1) geführt wird.

3. Verfahren nach einem der vorhergehenden Ansprüche, **dadurch gekennzeichnet, dass** der Hebedraht (30) U-förmig durch das Führungsloch (12) geführt wird.

4. Windturbinenbauteil (10a; 10b; 10c; 10d; 10e) zur Durchführung eines Verfahrens nach einem der vorhergehenden Ansprüche, umfassend einen Windturbinenbasiskörper (11), mindestens ein Führungsloch (12) mit einer Eingangsöffnung (13) und einer Austrittsöffnung (14) zum Führen eines Hebedrahts (30), um das Windturbinenbauteil (10a; 10b; 10c; 10d; 10e) anzuheben, und eine Gegenstützfläche (15), die neben der Austrittsöffnung (14) außerhalb des Führungslochs (12) angeordnet ist, **dadurch gekennzeichnet, dass** die Gegenstützfläche (15) flach ist.

5. Windturbinenbauteil (10c) nach Anspruch 4, **gekennzeichnet durch** eine Vielzahl von in dem Windturbinenbasiskörper (11) ausgebildeten Führungslöchern (12) und eine Vielzahl von Gegenstützflächen (15), die jeweils neben den Austrittsöffnungen (14) außerhalb der Führungslöcher (12) angeordnet sind.

6. Windturbinenbauteil (10d) nach einem der Ansprüche 4 bis 5, **gekennzeichnet durch** mindestens eine Kammer (16) in dem Windturbinenbasiskörper (11), wobei sich das mindestens eine Führungsloch (12) von einer Außenfläche (17) des Windturbinenbasiskörpers (11) zu der Kammer (16) erstreckt und wobei die Gegenstützfläche (15) Teil der Kammer (16) ist.

7. Windturbinenbauteil (10b) nach einem der Ansprüche 4 bis 6, **gekennzeichnet durch** ein Gegenverbindungsmittel (18) zur Bereitstellung einer lösbaren, verriegelnden und/oder formschlüssigen Verbindung mit einem Verbindungsmittel (24) des Hebewerkzeugs (20b).

8. Windturbinenbauteil (10e) nach einem der Ansprüche 4 bis 7, **dadurch gekennzeichnet, dass** der Windturbinenbasiskörper (11) mindestens eine Gegenstützaussparung (19) umfasst, in der die Gegenstützfläche (15) ausgebildet ist.

9. Hebewerkzeug (20a; 20b; 20c; 20d; 20e; 20f) zur Durchführung eines Verfahrens nach einem der Ansprüche 1 bis 3, umfassend einen mit einer Stützfläche (22) einteiligen Hebewerkzeugbasiskörper (21) zum Stützen einer Gegenstützfläche (15) des Windturbinenbauteils (10a; 10b; 10c; 10d; 10e) während des Anhebens des Windturbinenbauteils (10a; 10b; 10c; 10d; 10e) und eine Anbringfläche (23) zum Anbringen eines Hebedrahts (30) daran, wobei die Stützfläche (22) flach ist und die Anbringfläche (23) einen kreisförmigen Querschnitt umfasst.

10. Hebewerkzeug (20a; 20b; 20c; 20d; 20e; 20f) nach Anspruch 9, **dadurch gekennzeichnet, dass** der Hebewerkzeugbasiskörper (21) symmetrisch ausgebildet ist.

11. Hebewerkzeug (20a; 20b; 20c; 20d; 20e; 20f) nach einem der Ansprüche 9 bis 10, **dadurch gekennzeichnet, dass** mindestens ein Teil der Anbringfläche (23) bezüglich einer Längsachse (X1) des Hebewerkzeugbasiskörpers (21) in der Mitte des Hebewerkzeugbasiskörpers (21) angeordnet ist.

12. Hebewerkzeug (20a; 20b; 20c; 20d; 20e; 20f) nach einem der Ansprüche 9 bis 11, **dadurch gekennzeichnet, dass** der Hebewerkzeugbasiskörper (21) an der Anbringfläche (23) einen kreisförmigen Querschnitt umfasst.

13. Hebewerkzeug (20b) nach einem der Ansprüche 9 bis 12, **gekennzeichnet durch** ein Verbindungsmittel (24) zur Bereitstellung einer lösbaren, verriegelnden und/oder formschlüssigen Verbindung mit einem Gegenverbindungsmittel (18) des Windturbinenbauteils (10b).

14. Hebewerkzeug (20d) nach einem der Ansprüche 9 bis 13, **dadurch gekennzeichnet, dass** der Hebewerkzeugbasiskörper (21) einen ersten Stützabschnitt (26), der mindestens einen Teil der Stützfläche (22) bildet, und einen Anbringabschnitt (28) umfasst, der mindestens einen Teil der Anbringfläche (23) bildet, wobei der erste Stützabschnitt (26) c-förmig ist und mindestens ein Teil des Anbringabschnitts (28) von der Mitte des ersten Stützabschnitts (26) vorragt, um einen E-förmigen Hebewerkzeugbasiskörper (21) zu bilden.

15. Hebewerkzeug (20d) nach Anspruch 14, **dadurch gekennzeichnet, dass** der Hebewerkzeugbasiskörper (21) einen zweiten Stützabschnitt (27) umfasst, der von dem ersten Stützabschnitt (26) beabstandet an dem Anbringabschnitt (28) ausgebildet ist.

## Revendications

1. Procédé de levage d'un composant de l'éolienne (10a ; 10b ; 10c ; 10d ; 10e) au moyen d'un outil de levage (20a ; 20b ; 20c ; 20d ; 20e ; 20f) et un câble de levage (30), dans lequel l'outil de levage (20a ; 20b ; 20c ; 20d ; 20e ; 20f) fournit un corps de base de l'outil de levage (21) en une seule pièce avec une surface d'appui (22) et une surface de fixation (23), dans lequel la surface d'appui (22) est plate et la surface de fixation (23) comprend une section transversale circulaire, et dans lequel le composant de l'éolienne (10a ; 10b ; 10c ; 10d ; 10e) fournit un corps de base de l'éolienne (11), au moins un trou de guidage (12) avec une ouverture d'entrée (13) et une ouverture de sortie (14), et une surface d'appui antagoniste (15) située à côté de l'ouverture de sortie (14) à l'extérieur du trou de guidage (12), dans lequel la surface d'appui antagoniste (15) est plate, comprenant les étapes consistant à :
- guider le câble de levage (30) à travers le trou de guidage (12),
- fixer le câble de levage (30) au niveau de la surface de fixation (23) de l'outil de levage (20a ; 20b ; 20c ; 20d ; 20e ; 20f),
- mettre la surface d'appui (22) de l'outil de levage (20a ; 20b ; 20c ; 20d ; 20e ; 20f) sur la surface d'appui antagoniste (15) du composant de l'éolienne (10a ; 10b ; 10c ; 10d ; 10e) pour fournir un contact de support plat au même niveau entre la surface d'appui (22) et la surface d'appui antagoniste (15) pendant le levage du composant de l'éolienne (10a ; 10b ; 10c ; 10d ; 10e), et
- lever le composant de l'éolienne (10a ; 10b ; 10c ; 10d ; 10e) avec l'outil de levage (20a ; 20b ; 20c ; 20d ; 20e ; 20f) et le câble de levage (30) dans une direction de levage (D1) depuis l'ouverture de sortie (14) vers l'ouverture d'entrée (13).

2. Procédé selon la revendication 1, **caractérisé en ce que** le câble de levage (30) est guidé dans une direction de guidage (D2) depuis l'ouverture d'entrée (13) vers l'ouverture de sortie (14) à travers le trou de guidage (12) contre la direction de levage (D1).

3. Procédé selon l'une quelconque des revendications précédentes, **caractérisé en ce que** le câble de levage (30) est guidé en forme de U à travers le trou de guidage (12).

4. Composant de l'éolienne (10a ; 10b ; 10c ; 10d ; 10e) pour la mise en oeuvre d'un procédé selon l'une quelconque des revendications précédentes, comprenant un corps de base de l'éolienne (11), au moins un trou de guidage (12) avec une ouverture d'entrée (13) et une ouverture de sortie (14) pour guider un câble de levage (30) pour lever le composant de l'éolienne (10a ; 10b ; 10c ; 10d ; 10e), et une surface d'appui antagoniste (15) située à côté de l'ouverture de sortie (14) à l'extérieur du trou de guidage (12), **caractérisé en ce que** la surface d'appui antagoniste (15) est plate.

5. Composant de l'éolienne (10c) selon la revendication 4, **caractérisé par** une pluralité de trous de guidage (12) formés dans le corps de base de l'éolienne (11) et une pluralité de surfaces d'appui antagonistes (15), chacune située à côté des ouvertures de sortie (14) à l'extérieur des trous de guidage (12) .

6. Composant de l'éolienne (10d) selon l'une quelconque des revendications 4 à 5, **caractérisé par** au moins une chambre (16) à l'intérieur du corps de base de l'éolienne (11), dans lequel le au moins un trou de guidage (12) s'étend depuis une surface extérieure (17) du corps de base de l'éolienne (11) vers la chambre (16), et dans lequel la surface d'appui antagoniste (15) fait partie de la chambre (16).

7. Composant de l'éolienne (10b) selon l'une quelconque des revendications 4 à 6, **caractérisé par** des moyens de connexion antagonistes (18) pour fournir une connexion amovible, emboîtable et/ou s'adaptant à la forme avec des moyens de connexion (24) de l'outil de levage (20b).

8. Composant de l'éolienne (10e) selon l'une quelconque des revendications 4 à 7, **caractérisé en ce que** le corps de base de l'éolienne (11) comprend au moins un renfoncement d'appui antagoniste (19) dans lequel est formée la surface d'appui antagoniste (15).

9. Outil de levage (20a ; 20b ; 20c ; 20d ; 20e ; 20f) pour mettre en oeuvre un procédé selon l'une quelconque des revendications 1 à 3, comprenant un corps de base de l'outil de levage (21) en une seule pièce avec une surface d'appui (22) pour soutenir une surface d'appui antagoniste (15) du composant de l'éolienne (10a ; 10b ; 10c ; 10d ; 10e) pendant le levage du composant de l'éolienne (10a ; 10b ; 10c ; 10d ; 10e), et une surface de fixation (23) pour fixer un câble de levage (30) à celui-ci, dans lequel la surface d'appui (22) est plate et la surface de fixation (23) comprend une section transversale circulaire.

10. Outil de levage (20a ; 20b ; 20c ; 20d ; 20e ; 20f) selon la revendication 9, **caractérisé en ce que** le corps de base de l'outil de levage (21) est de forme symétrique.

11. Outil de levage (20a ; 20b ; 20c ; 20d ; 20e ; 20f) selon l'une quelconque des revendications 9 à 10, **caractérisé en ce qu'**au moins une partie de la surface de fixation (23) est située, par rapport à un axe longitudinal (X1) du corps de base de l'outil de levage (21), au milieu du corps de base de l'outil de levage (21).

12. Outil de levage (20a ; 20b ; 20c ; 20d ; 20e ; 20f) selon l'une quelconque de revendications 9 à 11, **caractérisé en ce que** le corps de base de l'outil de levage (21) comprend, au niveau de la surface de fixation (23), une section transversale circulaire.

13. Outil de levage (20b) selon l'une quelconque des revendications 9 à 12, **caractérisé par** des moyens de connexion (24) pour fournir une connexion amovible, emboîtable et/ou s'adaptant à la forme avec des moyens de connexion antagonistes (18) du composant de l'éolienne (10b).

14. Outil de levage (20d) selon l'une quelconque des revendications 9 à 13, **caractérisé en ce que** le corps de base de l'outil de levage (21) comprend une première portion d'appui (26) formant au moins une partie de la surface d'appui (22), et une portion de fixation (28) formant au moins une partie de la surface de fixation (23), dans lequel la première portion d'appui (26) est en forme de C et au moins une partie de la portion de fixation (28) fait saillie depuis le centre de la première portion d'appui (26) pour former un corps de base de l'outil de levage en forme de E (21).

15. Outil de levage (20d) selon la revendication 14, **caractérisé en ce que** le corps de base de l'outil de levage (21) comprend une deuxième portion d'appui (27) qui est formée au niveau de la portion de fixation (28) séparée de la première portion d'appui (26).
